# EUROPÄISCHE PATENTSCHRIFT

(11) **EP 2 819 550 B1**
(45) Veröffentlichungstag und Bekanntmachung des Hinweises auf die Patenterteilung: **04.07.2018**
(21) Anmeldenummer: 13708761.5
(22) Anmeldetag: 28.02.2013
(51) Int. Cl.: A47C 20/04, A47C 31/00

(54) **STEUEREINRICHTUNG FÜR MÖBEL-VERSTELLANTRIEBE UND ZUSATZGERÄT FÜR EINE STEUEREINRICHTUNG**
CONTROL DEVICE FOR FURNITURE ADJUSTING DRIVES AND ADDITIONAL DEVICE FOR A CONTROL DEVICE
DISPOSITIF DE COMMANDE POUR MÉCANISME DE RÉGLAGE DE MEUBLE ET APPAREIL SUPPLÉMENTAIRE POUR LE DISPOSTIIF DE COMMANDE

(30) Priorität: 28.02.2012 DE 102012101626
(43) Veröffentlichungstag der Anmeldung: 07.01.2015
(73) Patentinhaber: Dewertokin GmbH, 32278 Kirchlengern (DE)
(72) Erfinder: HILLE, Armin, 33659 Bielefeld (DE); LOLEY, Steffen, 49082 Osnabrück (DE); SCHRÖDER, Thomas, 32278 Kirchlengern (DE)
(74) Vertreter: Kleine, Hubertus
(86) Internationale Anmeldenummer: PCT/EP2013/054097
(87) Internationale Veröffentlichungsnummer: WO 2013/127957

(56) Entgegenhaltungen:
- WO-A2-2010/102629
- US-A1- 2008 262 657
- US-A1- 2009 139 029

## Beschreibung

Die Erfindung betrifft ein System mit einer Steuereinrichtung und ein damit ausgestattetes Möbel. Verstellantriebe, häufig auch als elektromotorische Möbelantriebe bezeichnet, werden in Liege- und Sitzmöbel eingebaut, um eine Verstellung von Möbelteilen wie Sitzen, Rückenlehnen, Fußbänken usw. relativ zu einem Grundkörper des Möbels und relativ zueinander komfortabel bewegen zu können. Verstellbare Sitzmöbel, insbesondere sogenannte Fernseh- oder Entspannungssessel, weisen dazu üblicherweise einen mechanisch relativ aufwändigen Möbelbeschlag auf, der im Zusammenwirken einer Vielzahl von Hebeln und Gestängen einen komplexen Bewegungsablauf der verschiedenen an ihm montierten Polstereinheiten ermöglicht.

Zur Ansteuerung und Stromversorgung der Verstellantriebe ist eine Steuereinrichtung am oder im Möbel angeordnet, die Bedienbefehle eines Benutzers von einer Bedieneinheit empfängt und in Ansteuersignale für die Verstellantriebe umsetzt.

Eine derartige Steuereinrichtung und Bedieneinrichtung ist beispielsweise aus der Druckschrift DE 10 2008 033 627 A1 bekannt. In der Druckschrift DE 93 16 465 U1 ist eine Steuereinrichtung bekannt, die neben der Ansteuerung von Verstellantrieben weitere Funktionalität aufweist. So sind eine Notabsenkungsfunktion und eine Steuerung durch einen Zeitgeber integriert. Nachteilig ist dabei, dass für unterschiedliche gewünschte weitere Funktionalitäten jeweils eine entsprechende Steuereinrichtung als ein eigenständiges Produkt erstellt werden muss, was Entwicklungs-, Produktions- und Lagerhaltungskosten erhöht. Ein weiteres Beispiel ist aus US 2009/0139029 A1 bekannt. Es ist Aufgabe der vorliegenden Erfindung, eine anpassungsfähige Steuereinrichtung bereitzustellen, die leicht um gewünschte Zusatzfunktionen ergänzt werden kann.

Die Aufgabe wird durch ein System aus einer Steuereinrichtung, mindestens einer Bedieneinheit und mindestens einem Zusatzgerät, sowie ein damit ausgestattetes Möbel gelöst. Bevorzugte Weiterbildungen sind Gegenstand der abhängigen Ansprüche.

Eine erfindungsgemäße Steuereinrichtung der eingangs genannten Art weist einen als Multifunktionsschnittstelle ausgebildeten Multifunktionsanschluss auf, der mindestens eine Datensignalleitung zur Datenübertragung, mindestens eine Stromversorgungsleitung und mindestens eine Ein- und eine Ausgangssignalleitung aufweist. Dabei ist die Steuereinrichtung dazu eingerichtet, auf der Datensignalleitung der Multifunktionsschnittstelle Datensignale abhängig von einem Betätigen eines der Bedienelemente oder weiterer Bedienelemente der Bedieneinheit auszugeben. Eine derartige Multifunktionsschnittstelle erlaubt es, Zusatzgeräte anzuschließen, die dann mit der Steuereinrichtung zusammenwirken und ebenfalls über die Bedieneinheit bedient werden können, indem die über die Datensignalleitung übertragenen Datensignale oder die Ausgangssignalleitung ausgewertet werden. Die Datensignalleitungen sind dabei bevorzugt für eine serielle Datenübertragung ausgelegt. Alternativ ist eine parallele Datenübertragung möglich. Das System kann durch die Multifunktionsschnittstelle flexibel ausgebaut werden und ist damit in einer Basisversion material- und kostengünstig herstellbar und dennoch nach Bedarf anpassbar. Erfindungsgemäß wird die mindestens eine Ausgangssignalleitung abhängig von einer Betätigung eines der Bedienelemente oder weiterer Bedienelemente der Bedieneinheit durch die Steuereinrichtung mit Spannung beaufschlagt. Zusatzgeräte können so zumindest gewisse Funktionalitäten bieten, ohne dass sie selbst eine Logikschaltung, z.B. eine Busanschaltung, benötigen, um Signale auf den Datensignalleitungen auszuwerten. Bevorzugt ist die mindestens eine Ausgangssignalleitung zur Ansteuerung eines Leuchtmittels eingerichtet. Die häufig nachgefragte Zusatzfunktionalität einer Beleuchtung kann so sehr einfach und mit einem kostengünstigen Zusatzgerät umgesetzt werden.

In einer vorteilhaften Ausgestaltung der Steuereinrichtung wird ein Signal auf der mindestens einen Eingangssignalleitung von der Steuereinrichtung eingelesen und ausgewertet. Auch dieses dient dazu, häufig benötigte Zusatzfunktionalitäten einfach in Zusatzgeräten implementieren zu können. Bevorzugt betrifft das Signal auf der mindestens einen Eingangssignalleitung eine Notabsenkung des mindestens einen Verstellantriebs, wobei die Steuereinrichtung dazu eingerichtet ist, unabhängig von einem Betätigen eines Bedienungselements der Bedieneinheit den mindestens einen Verstellantrieb zu betätigen. Diese sicherheitskritische Funktion kann so implementiert werden, ohne Signale auf den Datensignalleitungen auszuwerten. Dieses ist nicht nur kostengünstig, sondern auch sicherheitstechnisch gegenüber einer Signalübertragung zur Notabsenkung über die Datensignalleitungen zu bevorzugen. Besonders bevorzugt weist der Multifunktionsanschluss neben der Stromversorgungsleitung eine Notstromversorgungsleitung auf, die in diesem Zusammenhang eingesetzt werden kann, falls die reguläre Stromversorgung nicht verfügbar ist.

Ein erfindungsgemäßes Zusatzgerät zum Anschluss an eine derartige Steuereinrichtung weist ein Multifunktionskabel mit Multifunktionsstecker zur Verbindung mit dem Multifunktionsanschluss der Steuereinrichtung auf, wodurch die Multifunktionsschnittstelle im Zusatzgerät verfügbar ist. Mit einem auf diese Weise zur Steuereinrichtung kompatiblen Zusatzgerät können die Vorteile der Multifunktionsschnittstelle für das Zusatzgerät genutzt werden.

In einer vorteilhaften Ausgestaltung weist das Zusatzgerät einen mit dem Multifunktionskabel in elektrischer Verbindung stehenden Multifunktionsanschluss auf. So können mehrere Zusatzgeräte hintereinander verkettet (daisy-chain) angeschlossen werden, auch wenn die Steuereinrichtung nur einen Multifunktionsanschluss aufweist.

In einer weiteren vorteilhaften Ausgestaltung ist das Zusatzgerät als Beleuchtungseinheit ausgebildet und weist ein Leuchtmittel auf, das über eine der Ausgangssignalleitungen der Multifunktionsschnittstelle stromversorgt und/oder angesteuert wird. In einer vorteilhaften Ausgestaltung ist das Zusatzgerät als Notabsenkungseinheit ausgebildet und weist einen Notschalter auf, der mit einer der Eingangssignalleitungen der Multifunktionsschnittstelle zusammenwirkt. Besonders bevorzugt ist dabei eine Batterieaufnahme für mindestens eine Batterie vorgesehen und die Notabsenkungseinheit ist dazu eingerichtet, bei Betätigung des Notschalters eine Notstromversorgungsleitung der Multifunktionsschnittstelle mit einer Spannung der mindestens einen Batterie zu beaufschlagen. Die genannten Zusatzfunktionalitäten werden so nachrüstbar im System verfügbar.

In einer weiteren vorteilhaften Ausgestaltung ist das Zusatzgerät als eine USB-Anschlusseinheit ausgebildet und weist mindestens einen USB-Anschluss auf, der mit Stromversorgungsleitungen und/oder Datensignalleitungen der Multifunktionsschnittstelle verbunden ist. Bevorzugt ist zudem ein Audioanschluss zur Weiterleitung eines Audiosignals über ein Audiokabel vorhanden. Zusätzlich kann auch eine Bluetooth-Schnittstelle zur Ankopplung eines Smartphones o.ä. vorgesehen sein. Ein derartiges Zusatzgerät erweitert die Steuereinrichtung um Multmedia-Funktionalitäten und stellt praktischerweise eine Auflademöglichkeit für Multimedia- und Telefongeräte zur Verfügung. Es wird so verhindert, dass zu viele Kabel von Ladegeräten um das Möbel herum liegen, von denen eine Sturzgefahr ausgeht.

In einer weiteren vorteilhaften Ausgestaltung ist das Zusatzgerät als ein Multifunktions-Radiogerät ausgebildet und weist ein Radio und optional eine Uhr auf. Bevorzugt können Funktionalitäten der zuvor genannten Zusatzgeräte hier ebenfalls integriert sein.

In einer weiteren vorteilhaften Ausgestaltung weist das Zusatzgerät eine Netzsteckdose auf, die über Datensignale auf der Datensignalleitung der Multifunktionsschnittstelle schaltbar ist. So können weitere Verbraucher oder Geräte gesteuert werden.

Ein erfindungsgemäßes Möbel mit einem Rahmenelement und einem über mindestens einen Verstellantrieb beweglich in dem Rahmenelement geführten Stützelement umfasst ein derartiges System. Es ergeben sich die im Zusammenhang mit dem Steuergerät und dem Zusatzgerät genannten Vorteile. Die Erfindung wird nachfolgend anhand von Ausführungsbeispielen mithilfe der beigefügten Zeichnungen näher erläutert. Es zeigen:
- Fig. 1: eine schematische Perspektivansicht einer beispielhaften Möbelanordnung;
- Fig. 2-2a: schematische Perspektivansichten einer Bedieneinheit;
- Fig. 3: ein Blockschaltbild eines Systems aus Steuereinrichtung, Verstellantrieben und Zusatzgeräten;
- Fig. 4: eine schematische perspektivische Ansicht einer Beleuchtungseinrichtung als ein erstes Ausführungsbeispiel eines Zusatzgeräts;
- Fig. 5a, 5b: eine schematische perspektivische Ansicht einer Notabsenkungseinheit als ein zweites Ausführungsbeispiel eines Zusatzgeräts;
- Fig. 6: eine schematische perspektivische Ansicht einer USB-Anschlusseinheit als ein drittes Ausführungsbeispiel eines Zusatzgeräts; und
- Fig. 7: eine schematische perspektivische Ansicht eines Multifunktions-Radiogeräts als ein viertes Ausführungsbeispiel eines Zusatzgeräts.

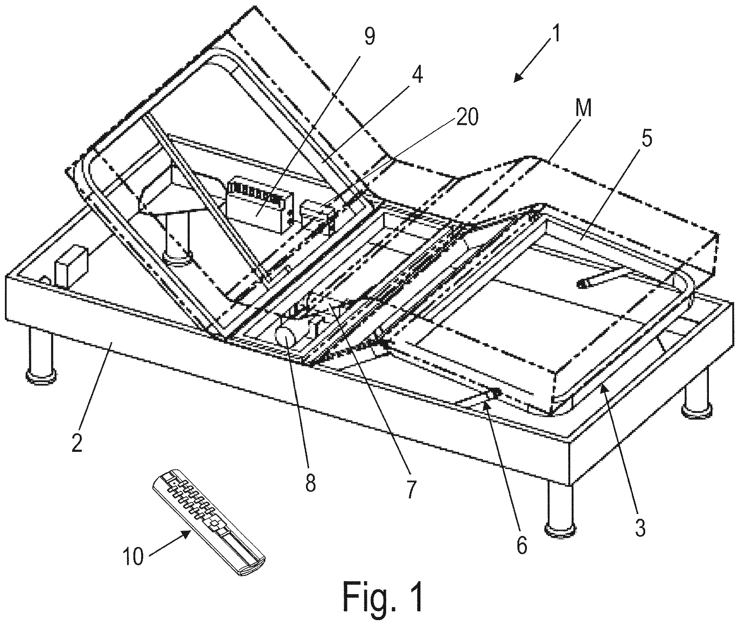

Fig. 1 zeigt eine Möbelanordnung mit einem Möbel 1. Als Möbel 1 ist hier beispielhaft ein Bett dargestellt. Das Möbel 1 weist wenigstens ein Stützelement 3 zur Aufnahme von Gegenständen, einer Polsterung, einer Matratze M und/oder einer Person auf. Das Stützelement 3 ist z.B. als ein Lattenrost, als ebene Stützfläche oder dergleichen ausgebildet und an einem Grundelement 2, hier ein Gestell mit Füßen, zur Ankopplung des Möbels 1 an einem Aufstellort, z.B. Fußboden, angebracht.

Das Stützelement 3 weist hier ein Rückenteil 4 und ein Beinteil 5 auf, welche relativ zu einem weiteren Stützelement oder relativ zu dem Grundelement 2 beweglich gelagert angeordnet sind. Diese bewegliche Anordnung ist hier mittels eines so genannten Bewegungsbeschlags 6 realisiert. Die Bewegung ist verschiebbar und/oder schwenkbar ausgebildet.

Das beweglich gelagerte Rückenteil 4 und das Beinteil 5 sind jeweils mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantrieb 7, 8 sind hier als Linearantriebe ausgebildet. Die Linearantriebe weisen einen oder eine Anzahl Elektromotore auf, wobei jedem Motor ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Motors eine Linearbewegung des Abtriebsgliedes erzeugt. Das letzte Getriebeglied oder ein damit verbundenes weiteres Glied bildet ein Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundrahmen 2 verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundrahmen 2 verstellt werden.

Die elektromotorischen Verstellantrieb 7, 8 sind mit einer Steuereinrichtung 9 verbunden. Diese Verbindung kann z.B. als steckbare Kabelverbindung ausgeführt sein, was hier nicht näher dargestellt ist. Die Steuereinrichtung 9 weist eine elektrische Versorgungseinheit auf, welche die elektrische Energie, z.B. aus dem Netz, für die elektromotorischen Verstellantriebe 7, 8 bereitstellt. Dazu ist die Steuereinrichtung 9 in diesem Beispiel über ein nicht gezeigtes Netzkabel mit einem Netzstecker mit einem Netzanschluss verbindbar. Der Netzstecker leitet über das Netzkabel die eingangsseitige Netzspannung zu der elektrischen Versorgungseinheit der Steuereinrichtung 9, welche sekundärseitig eine Kleinspannung in Form einer Gleichspannung abgibt und diese zu einer Motorsteuerung weiterleitet.

Alternativ hierzu ist der Steuereinrichtung 9 eine nicht näher dargestellte netzabhängige Spannungsversorgung mit Netzeingang und mit sekundärseitigem Kleinspannungsausgang vorgeschaltet, welche über die Leitung 9d die Kleinspannung in Form einer Gleichspannung zuführt.

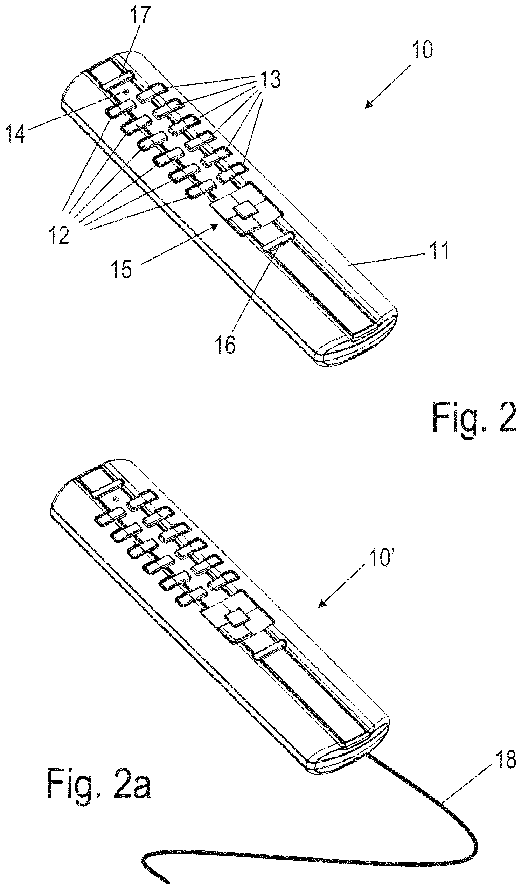

Dem Möbel 1 ist ferner eine Bedieneinheit 10, 10' zugewiesen. In den Fig. 2 und 2a sind schematische Perspektivansichten einer Bedieneinheit 10, 10' in zwei verschiedenen Ausgestaltungen dargestellt. Die Bedieneinheit 10, 10' weist Bedienelemente 12, 13 auf, mittels derer die elektromechanischen Verstellantriebe 7, 8 über die Steuereinrichtung 9 steuerbar sind.

Die Bedieneinheit 10 gemäß Fig. 2 ist mit einer Sendeeinrichtung oder Sende-/Empfangseinrichtung für eine drahtlose Übertragung versehen. Die drahtlose Übertragung kann eine Funkübertragungsstrecke, optische Übertragungsstrecke (z.B. Infrarot) oder/und eine Ultraschallübertragungsstrecke sein, wobei die Steuereinrichtung 9 mit einer jeweiligen entsprechenden Empfangseinrichtung ausgerüstet ist.

In einer anderen Ausführung ist die Bedieneinheit 10' mit einer Bedienungsleitung 18 in drahtgebundener Form ausgeführt, was Fig. 2a zeigt. Dabei ist die Bedienungsleitung 18 mit der Steuereinrichtung 9 verbindbar, z.B. steckbar.

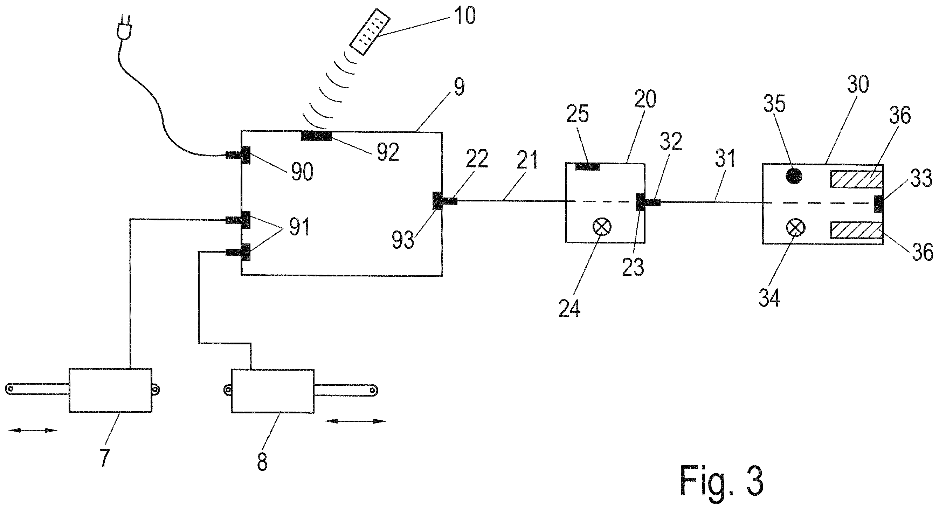

Die Bedieneinheit 10, 10' ist mit Bedienelementen 12, 13 versehen, welche zur Bedienung eines jeweiligen elektromotorischen Verstellantriebs 7, 8 vorgesehen sind. Die Bedienelemente 12, 13 sind z.B. als Taster ausgeführt. Beispielsweise dienen die Bedienelemente 12 zum Hochstellen und die Bedienelemente 13 zum Absenken des jeweiligen beweglichen Möbelteils. In Fig. 2 und 2a sind Bedieneinheiten 10, 10' für sechs Verstellantriebe gezeigt. Außerdem sind Zusatzbedienelemente 16, 17 vorgesehen, über die Zusatzfunktionen bedienbar sein können. Solche Zusatzfunktionen werden im Zusammenhang mit den Fig. 3 bis 7 näher erläutert. Die Zusatzbedienelemente 15, 16, 17 können als Taster oder/und Schalter ausgeführt sein.

Ferner ist die Bedieneinheit 10, 10' mit einem Meldeelement 14, z.B. einer Leuchtdiode oder einer Anzeigeeinheit, ausgerüstet. Das Meldeelement 14 dient z.B. zur Funktionsanzeige bzw. Rückmeldung, Fehleranzeige etc.

Ein weiteres Zusatzbedienelement 15, welches auch aus mehreren Bedienelementen oder/und einem Kombinationsbedienungselement bestehen kann, dient für eine so genannte Memoryfunktion der elektromotorischen Verstellantriebe 7, 8.

Bei Betätigen eines Bedienelementes 12, 13 wird ein Steuersignal zur Ansteuerung des jeweiligen elektromechanischen Verstellantriebs 7, 8 über die Übertragungsstrecke drahtlos oder drahtgebunden der Steuereinrichtung 9 übermittelt. Die Steuereinrichtung weist Schaltelemente auf, welche die Steuersignale der Übertragungsstrecke in Schaltsignale zum Schalten des jeweiligen Verstellantriebs 7, 8 umwandeln. Die Schaltelemente können z.B. Relaisschalter oder/und Halbleiterschalter sein. Die manuell betätigbaren Bedienelemente 12, 13 der Bedieneinheit 10 erzeugen Steuersignale, die vom Empfänger der Steuereinrichtung 9 in Steuerströme für die Schaltelemente umgewandelt werden. Bei der drahtgebundenen Bedieneinheit 10' schalten die Bedienelemente 12, 13 den Steuerstrom der Relaisschalter bzw. der Halbleiterschalter. In beiden Fällen schalten die Leistungsschalter der Relaisschalter bzw. der Halbleiterschalter den hohen Motorstrom des jeweiligen elektromotorischen Verstellantriebs 7, 8.

Fig. 3 zeigt in Form eines schematischen Blockschaltbildes die Steuereinrichtung 9 mit damit verbundenen Komponenten detaillierter. Die in der Fig. 3 dargestellte Anordnung kann beispielsweise in dem Möbel 1 der Fig. 1 vorgesehen sein.

Die Steuereinrichtung 9 weist einen Versorgungsanschluss 90, der hier als Netzkabelanschluss ausgebildet ist, auf. In einer alternativen Ausgestaltung kann der Versorgungsanschluss 90 als Niederspannungsanschluss ausgebildet sein, der über ein externes Netzteil, beispielsweise ein Steckernetzteil, mit dem Stromnetz verbunden ist. Über den Stromversorgungsanschluss 90 wird die Steuereinrichtung 9 und auch die Verstellantriebe 7, 8 mit Strom versorgt. Weiter dient der Stromversorgungsanschluss 90 der Stromversorgung weiterer mit der Steuereinrichtung 9 verbundener Komponenten, wie nachfolgend näher erläutert wird.

Neben dem Stromversorgungsanschluss 90 weist die Steuereinrichtung 9 Verstellantriebsanschlüsse 91 auf, die jeweils mit einer der Verstelleinrichtungen 7, 8 verbunden sind. Über die Verstellantriebsanschlüsse 91 werden in den Verstellantrieben 7, 8 angeordnete Elektromotoren unmittelbar angesteuert und mit Strom versorgt. Zusätzlich kann über die Verstellantriebsanschlüsse 91 ein Signal eines in dem jeweiligen Verstellantrieb 7, 8 angeordneten Endschalters an die Steuereinrichtung 9 übertragen werden. Es kann jedoch auch vorgesehen sein, das Endschaltersignal in der in den jeweiligen Verstellantrieb 7, 8 auszuwerten. Weiterhin können Signalleitungen vorgesehen sein, über die eine Position des Abtriebsglieds des Verstellantriebs 7, 8 an die Steuereinrichtung 9 übertragen wird, um dieses Positionssignal bei der Ansteuerung der Verstellantriebe 7, 8 zu berücksichtigen.

Weiter ist an der Steuereinrichtung 9 eine Schnittstelle 92 angeordnet, über die die Steuereinrichtung 9 Signale von der Bedieneinheit 10 erhält. Wie im Zusammenhang mit Fig. 1 ausgeführt ist, kann die zwischen der Bedieneinheit 10 und der Steuereinrichtung 9 vorgesehene Datenübertragung drahtgebunden oder drahtlos per Funk, optisch (Infrarot) oder per Ultraschall erfolgen.

In dem in Fig. 3 dargestellten Ausführungsbeispiel ist eine Funkverbindung zwischen der Bedieneinheit 10 und der Steuereinrichtung 9 vorgesehen. Von der Bedieneinheit 10 gesendete und die Betätigung der Bedienelemente 12, 13 betreffende Signale der Bedieneinheit 10 werden von der Steuereinrichtung 9 in Signale für die Verstellantriebe 7, 8 umgesetzt. Zu diesem Zweck sind in der Steuereinrichtung 9 Schaltelemente, beispielsweise Relais oder Halbleiterleistungsschalter vorhanden, die einen Motorstrom für Elektromotoren in den Verstellantrieben 7, 8 schalten. Insoweit ist eine Basisfunktionalität der Steuereinrichtung 9 durch die Ausgabe von Leistungsströmen an den Verstellantriebsanschlüssen 91 gegeben.

Um flexibel optionale Ausstattungsmerkmale eines motorisierten Möbels 1 unterstützen zu können, weist die Steuereinrichtung 9 anmeldungsgemäß einen Multifunktionsanschluss 93 auf, an dem eine Multifunktionsschnittstelle bereitgestellt wird. Über den Multifunktionsanschluss 93 können Zusatzgeräte angeschlossen werden, wie in der Fig. 3 beispielhaft eine Beleuchtungseinheit 20 und eine Notabsenkungseinheit 30.

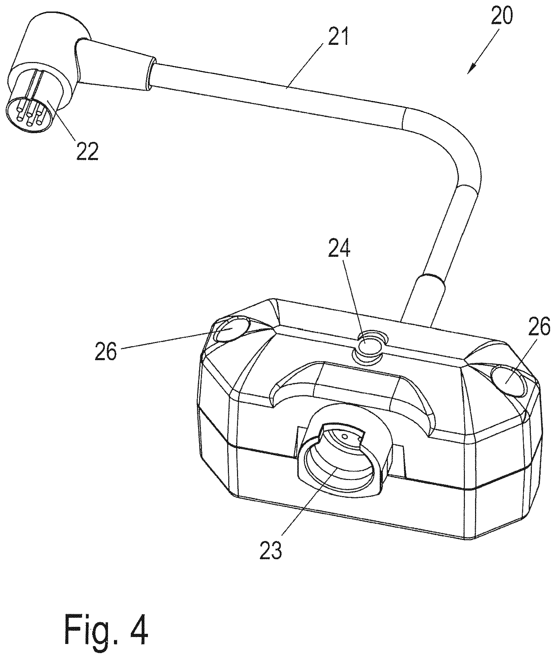

Die Beleuchtungseinheit 20, die auch in Fig. 4 nochmals perspektivisch dargestellt ist, weist ein Multifunktionskabel 21 auf, an dessen freiem Ende ein Multifunktionsstecker 22 montiert ist. Dieser Multifunktionsstecker 22 kann in den Multifunktionsanschluss 93 der Verstelleinrichtung eingesteckt werden. Zudem ist in der Beleuchtungseinrichtung 20 ein weiterer Multifunktionsanschluss 23 angeordnet, der elektrisch mit dem Multifunktionskabel 21 verbunden ist. Der Multifunktionsanschluss 23 ist vom gleichen Typ wie der Multifunktionsanschluss 93 der Steuereinrichtung 9. Anschlusspins des Multifunktionssteckers 22 der Beleuchtungseinheit 20 sind entsprechend auf den Multifunktionsanschluss 23 durchgeschleift. Das Durchschleifen der Verbindung ist in der Fig. 3 durch eine gestrichelte Linie zwischen dem Multifunktionsanschlusskabel 21 und dem Multifunktionsanschluss 23 angedeutet.

Die an den Multifunktionsanschlüssen 93, 23 anliegende Multifunktionsschnittstelle ist eine mehrpolige Schnittstelle, die verschiedene Leitungsgruppen umfasst. Zum einen sind mindestens zwei Stromversorgungsleitungen, beispielsweise eine mit positivem Potential beaufschlagt und eine mit Massepotential, vorgesehen. Über die Stromversorgungsleitung können an die Multifunktionsschnittstelle angeschlossene Komponenten mit Strom versorgt werden. Weiterhin steht mindestens eine Datensignalleitung zur Verfügung, über die eine bevorzugt bidirektionale serielle Datenübertragung erfolgen kann. Anstelle einer einzelnen Datensignalleitung, deren Potentiale gegenüber der in diesem Sinne gemeinsamen Masseleitung der Stromversorgungsleitungen bezogen werden, ist auch eine differentielle Datensignalübertragung über zwei Datensignalleitungen möglich. Generell können auf der oder den Datensignalleitungen bekannte serielle Protokolle wie RS232, RS485 oder gemäß dem USB (univeral serial bus)-Standard ablaufen. Alternativ kann auch eine parallele Datenübertragung umgesetzt sein.

Zusätzlich zu den Leitungen zur Stromversorgung und zur Datenübertragung sind Signalleitungen vorgesehen, zumindest eine Ausgangs- und eine Eingangsleitung. Die Leitungen zur Signalübertragung unterscheiden sich von der zur Datensignalübertragung darin, dass sie ein einpoliges digitales Schaltsignal übertragen können. Dabei wird die Ausgangssignalleitung von der Steuereinrichtung 9 abhängig von der Betätigung bestimmter der Bedienelemente 12, 13 oder Zusatzbedienelemente 16, 17 auf der Bedieneinheit 10 mit Spannung beaufschlagt oder nicht. Die Ausgangssignalleitung ist dabei durch ein in der Steuereinrichtung vorhandenes Schaltelement in der Lage, einen Laststrom der Größenordnung von beispielsweise bis zu einigen hundert Milliampere (mA) unmittelbar zu bedienen.

Die zumindest eine Ausgangsleitung ist anmeldungsgemäß zum Anschluss eines Leuchtmittels 21, z.B. einer oder mehrerer LEDs (light emitting diodes), der Beleuchtungseinheit 20 vorgesehen. Bei Montage der Beleuchtungseinheit 20 im inneren Bettrahmen kann somit durch Betätigen einer entsprechenden Taste auf der Bedieneinheit 10 eine Unterbettbeleuchtung eingeschaltet werden, die auch nachts ein sicheres Aufstehen aus dem Bett ermöglicht. Zudem kann das Leuchtmittel 21 als eine Signalleuchte eingesetzt werden, indem bestimmte Betriebszustände - beispielsweise ein Fehlerbetriebszustand - signalisiert werden, zum Beispiel durch einen bestimmten Blinkrhythmus der Leuchtmittel 21.

Weitere Ausgangsleitungen können vorgesehen sein, beispielsweise zum Betätigen von Relais, mit denen dann Netzverbraucher geschaltet werden können. Auch zur selektiven Stromversorgung von an der Multifunktionsschnittstelle angeschlossenen Komponenten oder Teilen der Komponenten, beispielsweise Mikrokontrollern, können Ausgangsleitungen verwendet werden.

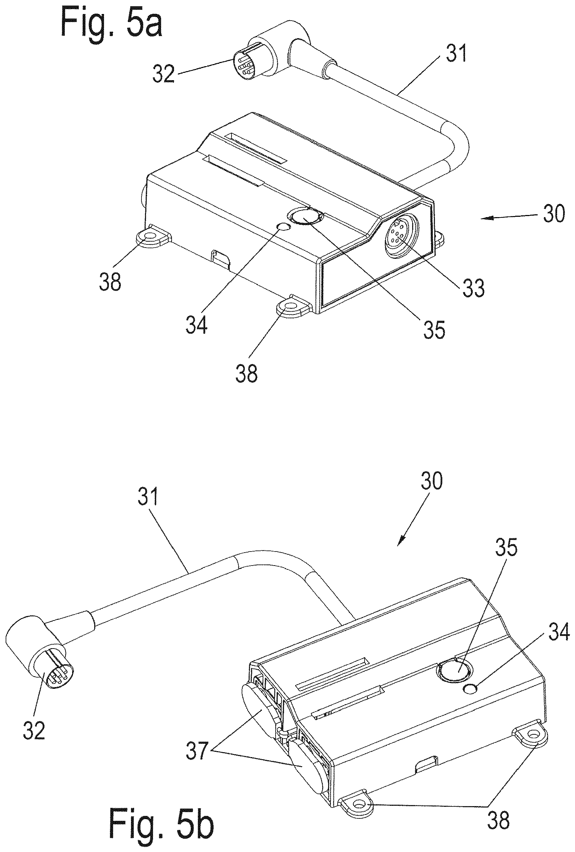

Neben der Beleuchtungseinheit 20 ist als eine weitere Einheit eine Notabsenkungseinheit 30 mit der Steuereinrichtung 9 verbunden. Die Notabsenkungseinheit 30 ist in der Fig. 5 in zwei verschiedenen Perspektiven (Teilfigur a, Teilfigur b) schematisch dargestellt.

Sie weist ebenso wie die Beleuchtungseinheit 20 ein Multifunktionskabel 31 mit Multifunktionsstecker 32 auf, sowie einen im Gehäuse angeordnete Multifunktionsanschluss 33. Die Notabsenkungseinheit 30 ist beim Ausführungsbeispiel der Fig. 3 mit ihrem Multifunktionsstecker 32 in den Multifunktionsanschluss 23 der Beleuchtungseinheit 20 eingesteckt. Hier wird somit von der Möglichkeit Gebrauch gemacht, mehrere Komponenten hintereinander an die Steuereinrichtung 9 anschließen zu können, auch wenn diese nur über eine Multifunktionsschnittstelle 93 verfügt.

Die Notabsenkungseinheit 30 weist ferner ein Leuchtmittel 34, das wie das Leuchtmittel 24 der Beleuchtungseinheit 20 als ein Nachtlicht oder auch zur Statusanzeige fungieren kann. Darüber hinaus weist sie einen als Taster ausgeführten Notschalter 35 auf, der unmittelbar auf eine der Leitungen im Multifunktionskabel 31 bzw. 21 einwirkt und als ein Eingang der Multifunktionsschnittstelle 93 von der Steuereinrichtung 9 eingelesen wird. Bei Betätigen des Notschalters 35 weist die Steuereinrichtung 9 die Verstellantriebe 7, 8 unmittelbar an, eine Aufwärtsbewegung zu stoppen. Gleichzeitig wird eine gegebenenfalls verlangsamte Abwärtsbewegung eingeleitet. Die Betätigung des Notschalters 35 hat höhere Priorität als eventuell von der Bedienungseinheit 10 abgegebene und von der Funkschnittstelle 92 empfangene anderslautende Bedienbefehle.

Als eine zusätzliche Sicherheitsmaßnahme sind in der Notabsenkungseinheit 30 zwei Aufnahmeschächte für Notversorgungsbatterien 36, beispielsweise in Form von handelsüblichen 9 Volt-Blöcken, vorgesehen. Eine Kontaktierung der Notversorgungsbatterien 36 erfolgt über Batterieclipse 37. Bei Betätigen des Notschalters 35 wird die Batteriespannung der Notversorgungsbatterien 36 auf eine weitere im Multifunktionskabel 31 bzw. 21 und in der Multifunktionsschnittstelle 93 definierte Leitung gelegt. So ist sichergestellt, dass auch bei einem Ausfall der Stromversorgung am Versorgungsanschluss 90 der Steuereinrichtung 9 genügend Energie für die Steuereinrichtung 9 zum Betätigen der Verstellantriebe 7, 8 zur Absenkung des entsprechenden Möbelteils zur Verfügung steht. Die Energie der Notversorgungsbatterien 36 reicht üblicherweise zumindest für einen Absenkvorgang aus. Vorteilhafterweise werden die Notversorgungsbatterien 36 jedoch nicht dauerhaft auf die entsprechende Leitung der Multifunktionsschnittstelle 93 gelegt, um ein Entleeren der Batterien durch Kriechströme o.ä. zu verhindern. So wird die Energie der Notversorgungsbatterien 36 gesichert für einen Notfall bei Betätigung des Notschalters 35 aufbewahrt.

Zur Befestigung der Beleuchtungseinheit 20 sind Befestigungslöcher 26, zur Befestigung der Notabsenkungseinheit 30 Befestigungslaschen 38 ebenfalls mit entsprechenden Löchern für Schrauben vorgesehen. Andere Befestigungsmöglichkeiten, beispielsweise eine Verklebung über doppelseitiges Klebeband an einen Rahmen des Möbels 1 sind ebenfalls denkbar.

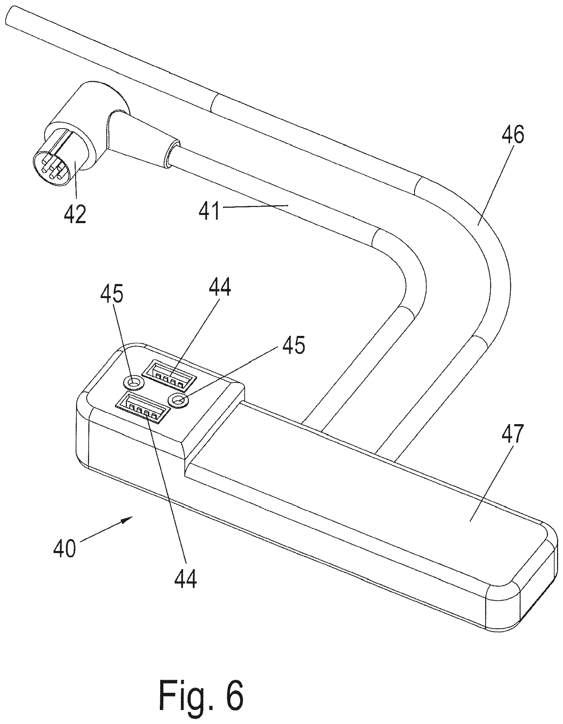

Fig. 6 zeigt ein weiteres an den Multifunktionsanschluss 93 anschließbares Zusatzgerät. Hierbei handelt es sich um eine USB (universal serial bus)-Einheit 40, die ebenfalls über ein Multifunktionskabel 41 mit Multifunktionsstecker 42 an den Multifunktionsanschluss 93 der Steuereinrichtung 9 unmittelbar oder an einen von einem anderen Zusatzgerät bereitgestellten Multifunktionsanschluss 23, 33 angeschlossen werden kann.

Die USB-Einheit 40 stellt eine oder mehrere, hier beispielhaft zwei USB-Anschlüsse 44 zur Verfügung, die in einer einfachsten Ausführung der USB-Einheit 40 als Ladebuchsen für angeschlossene USB-Geräte, beispielsweise Smartphones oder Tablets zur Verfügung, dienen können. In einer erweiterten Ausführung der USB-Einheit 40 sind auch Datenleitungen der USB-Anschlüsse 44 aktiv verwendbar und werden, ggf. nach einer Protokollanpassung, auf die Datensignalleitungen der Multifunktionsschnittstelle geschaltet. In einer derartigen Ausgestaltung kann beispielsweise ein USB-Speicherstick an einen der USB-Anschlüsse 44 angeschlossen werden, wobei über diesen USB-Speicherstick z.B. ein Update einer Betriebssoftware der Steuereinrichtung geladen wird.

Weiterhin kann die USB-Einheit 40 optional als eine Audioschnittstelle fungieren. Zu diesem Zweck sind Audioanschlüsse 45, beispielsweise 3,5 mm-Klinkenbuchsen vorhanden, die mit einem Audiokabel 46 in Verbindung stehen. Das Audiokabel 46 hat an seinem freien Ende hier nicht dargestellte Audioanschlüsse, beispielsweise ebenfalls Klinkenstecker, die in ein unter dem Bett montiertes Audiosystem einsteckbar sind.

Zur Befestigung der USB-Einheit 40 weist diese eine abgesenkte Fläche unterhalb der Anschlüsse 44, 45 auf. Die USB-Einheit 40 kann so auf einfache Weise zwischen Matratze und Bettrahmen eingesteckt werden, wobei sie durch die Matratze fixiert wird und die Anschlüsse 44, 45 leicht von außen zugänglich sind. Alternativ kann die USB-Einheit 40 mit der abgesenkten Fläche 47 mithilfe von doppelseitigem Klebeband auch am Bettrahmen fixiert werden. Auch eine Magnetbefestigung ist möglich und bietet sich insbesondere bei Bettrahmen oder Lattenrostrahmen aus Eisen bzw. Stahl an.

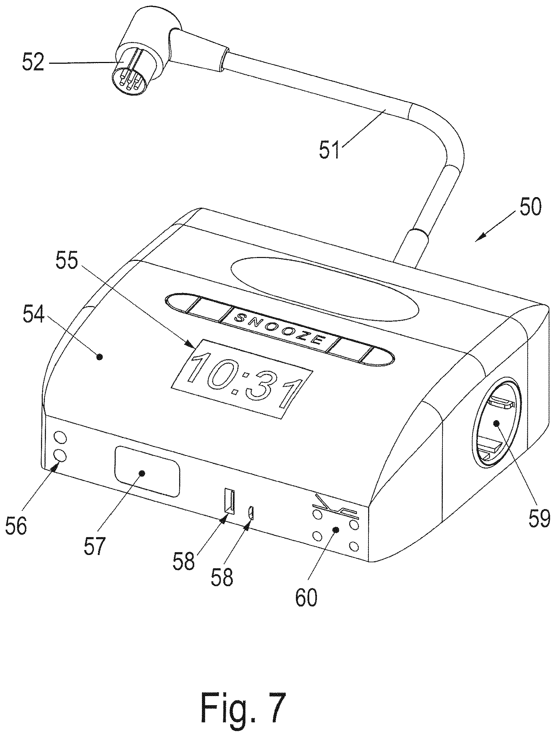

Fig. 7 zeigt ein ebenfalls zur Verbindung mit der Steuereinrichtung 93 geeignetes Multifunktions-Radiogerät 50. Eine Verbindung zur Multifunktionsschnittstelle ist wiederum über ein Multifunktionskabel 51 mit angesetztem Multifunktionsstecker 52 möglich. Das Multifunktions-Radiogerät 50 kann als Endgerät ausgebildet sein, das heißt es stellt keine weitere Multifunktionsschnittstelle zur Verbindung weiterer Komponenten zur Verfügung. Alternativ ist es möglich eine in der Fig. 7 nicht dargestellte Multifunktionsschnittstelle auch am Multifunktions-Radiogerät 50 anzuordnen.

Das Multifunktions-Radiogerät 50 verfügt über ein Radioteil 54 und ein Uhrenteil 55, die bevorzugt als ein Radiowecker zusammenwirken. Weiterhin können Sensoren 56 vorgesehen sein, beispielsweise ein Helligkeitssensor zur Einstellung der Helligkeit der Anzeige der Uhr 55 und/oder ein Bewegungsmelder, der automatisch eine Hintergrundbeleuchtung von Bedienelementen des Multifunktions-Radiogeräts 50 einschaltet, wenn eine Bewegung eines Benutzers detektiert wird. Weiter kann vorgesehen sein, dass eine erfasste Bewegung eines Benutzers als ein entsprechendes Signal auf der Multifunktionsschnittstelle weitergegeben wird. So kann beispielsweise eine Beleuchtungseinrichtung, z.B. der Beleuchtungseinheit 20 eingeschaltet werden.

Weiter kann eine Leuchte oder Lampe 57 vorgesehen sein, die sowohl als Leselampe am Multifunktions-Radiogerät 50 einschaltbar ist als auch durch entsprechenden Befehl der Bedienungseinheit 10 wie die Leuchtmittel 24 und 34 über die entsprechende Leitung der Multifunktionsschnittstelle 93 eingeschaltet werden. Weiter können auch hier USB-Anschlüsse 58 vorgesehen sein, bezüglich deren Funktion auf die USB-Einheit 40 der Fig. 6 verwiesen wird. Ferner ist eine Netzsteckdose 59 vorgesehen, die eine geschaltete Netzspannung bereitstellt, um weitere Geräte abhängig von der Uhr 55 und/oder abhängig von über das Multifunktionskabel 51 auf dessen Datensignalleitungen empfangenen Befehlen mithilfe der Bedienungseinheit 10 durch die Steuereinrichtung 9 zu schalten. So können beispielsweise vom Bett aus mit der einen Bedienungseinheit 10 auch größere Beleuchtungseinrichtungen o.ä. geschaltet werden. Das Multifunktions-Radiogerät 50 kann über die Stromversorgungsleitungen des Multifunktionskabels 51 mit Strom versorgt werden, mit Ausnahme der Netzsteckdose 59. Wenn diese vorgesehen ist, ist ein zusätzliches Netzkabel für das Multifunktions-Radiogerät 50 notwendig. Eine derartige geschaltete Netzsteckdose kann auch von einem entsprechend ausgestalteten separaten Zusatzgerät bereitgestellt werden.

Schließlich verfügt das Multifunktions-Radiogerät 50 optional über Bedienelemente 60, mit denen eine Steuerung der Steuereinrichtung 9 und der Verstellantriebe 7, 8 zusätzlich zur Bedieneinheit 10 erfolgen kann. Entsprechende Steuerbefehle werden über die Datensignalleitungen des Multifunktionskabels 51 übertragen. Auch ein Notschalter, der in seiner Funktion dem Notschalter 35 der Notabsenkungsseinheit 30 entspricht, kann bei dem Multifunktions-Radiogerät 50 vorgesehen sein. Auch eine oder mehrere Batterien zur Notversorgung, entsprechend der Batterie 36 der Notabsenkungseinheit 30, können in dem Multifunktions-Radiogerät 50 angeordnet sein.

In den dargestellten oder alternativen weiteren Zusatzgeräten kann zudem eine Bluetooth-Schnittstelle vorgesehen sein, um z.B. ein Smartphone zwecks Datenaustausch oder zur Bedienung des Möbels 1, mit den Datensignalleitungen der Multifunktionasschnittstelle zu koppeln.

In einer weiteren Ausgestaltung des Systems ist vorgesehen, eine weitere Steuereinrichtung für Verstellantriebe, die am Möbel 1 oder einem weiteren Möbel, beispielsweise einem zweiten Teil eines Doppelbetts, angeordnet ist, über die Multifunktionsschnittstelle mit der Steuereinrichtung 9 zu verbinden. Über die Multifunktionsschnittstelle ausgetauschte Daten und/oder Signale können verwendet werden, um die weitere Steuereinrichtung mit der Steuereinrichtung 9 zu synchronisieren, so dass beispielsweise synchrone Bewegungen von Möbelteilen vorgenommen werden können.

### Bezugszeichen

- 1: Möbel
- 2: Grundelement
- 3: Stützelement
- 4: Rückenteil
- 5: Beinteil
- 6: Bewegungsbeschlag
- 7, 8: Verstellantrieb
- 9: Steuereinrichtung

- 10: Bedieneinheit
- 11: Gehäuse
- 12, 13: Bedienungselement
- 14: Meldeelement
- 15, 16, 17: Zusatzbedienelement
- 18: Bedienungsleitung

- 20: Beleuchtungseinheit
- 21: Multifunktionskabel
- 22: Multifunktionsstecker
- 23: Multifunktionsanschluss
- 24: Leuchtmittel
- 25: Nahfeldfunkschnittstelle
- 26: Befestigungslöcher

- 30: Notabsenkungseinheit
- 31: Multifunktionskabel
- 32: Multifunktionsstecker
- 33: Multifunktionsanschluss
- 34: Leuchtmittel
- 35: Notschalter
- 36: Notversorgungsbatterie
- 37: Batterieclipse
- 38: Befestigungslaschen

- 40: USB-Einheit
- 41: Multifunktionskabel
- 42: Multifunktionsstecker
- 44: USB-Anschluss
- 45: Audioanschluss
- 46: Audiokabel
- 47: Befestigungsfläche

- 50: Multifunktions-Radiogerät
- 51: Multifunktionskabel
- 52: Multifunktionsstecker
- 54: Radio
- 55: Uhr
- 56: Sensor
- 57: Leuchte/Lampe
- 58: USB-Anschluss
- 59: Netzsteckdose
- 60: Bedienelemente

- 90: Versorgungsanschluss
- 91: Verstellantriebanschluss
- 92: Funkschnittstelle
- 93: Multifunktionsanschluss

- M: Matratze

## Patentansprüche

1. System zum Steuern mindestens eines elektromotorischen Verstellantriebs (7, 8) eines Möbels (1), umfassend eine mit dem Verstellantrieb (7, 8) verbundene Steuereinrichtung (9), mindestens ein Zusatzgerät und mindestens eine Bedieneinheit (10), wobei die Steuereinrichtung (9)
- mindestens einen Verstellantriebanschluss (91) zur Verbindung mit dem mindestens einen elektromotorischen Verstellantrieb (7, 8), und
- eine Schnittstelle (92) zur Ankopplung an die mindestens eine Bedieneinheit (10),
aufweist und wobei bei Betätigen eines Bedienungselements (12, 13) der Bedieneinheit (10) ein Schaltsignal zur Ansteuerung des mindestens einen elektromotorischen Verstellantriebs (7, 8) bzw. eines Elektromotors des elektromotorischen Verstellantriebs (7, 8) an dem Anschluss ausgegeben wird,
**dadurch gekennzeichnet, dass**
die Steuereinrichtung (9) einen als Multifunktionsschnittstelle ausgebildeten Multifunktionsanschluss (93) zum Anschluss des mindestens einen Zusatzgeräts aufweist, der
- mindestens eine Datensignalleitung zur Datenübertragung,
- mindestens eine Stromversorgungsleitung und
- mindestens eine Ein- und eine Ausgangssignalleitung, die sich von der Datensignalleitung dadurch unterscheiden, dass sie ein einpoliges digitales Schaltsignal übertragen können,
aufweist, wobei die Steuereinrichtung (9) dazu eingerichtet ist, auf der Datensignalleitung der Multifunktionsschnittstelle Datensignale abhängig von einem Betätigen eines der Bedienelemente (12, 13) oder weiterer Bedienelemente (15, 16, 17) der Bedieneinheit (10) auszugeben und die mindestens eine Ausgangssignalleitung abhängig von einer Betätigung eines der Bedienelemente (12, 13) oder weiterer Bedienelemente (15, 16, 17) der Bedieneinheit (10) mit Spannung zu beaufschlagen.

2. System nach Anspruch 1, bei dem mindestens eine Ausgangssignalleitung zur Ansteuerung eines Leuchtmittels (24, 34) eingerichtet ist.

3. System nach Anspruch 1 oder 2, bei dem ein Signal auf der mindestens einen Eingangssignalleitung von der Steuereinrichtung (9) eingelesen und ausgewertet wird.

4. System nach Anspruch 3, bei dem das Signal auf der mindestens einen Eingangssignalleitung eine Notabsenkung des mindestens einen Verstellantriebs (7, 8) betrifft, wobei die Steuereinrichtung (9) dazu eingerichtet ist, unabhängig von einem Betätigen eines Bedienungselements (12, 13) der Bedieneinheit (10) den mindestens einen Verstellantrieb (7, 8) zu betätigen.

5. System nach einem der Ansprüche 1 bis 4, bei dem der Multifunktionsanschluss (93) neben der Stromversorgungsleitung eine Notstromversorgungsleitung aufweist.

6. System nach einem der Ansprüche 1 bis 5, bei dem das Zusatzgerät ein Multifunktionskabel (21, 31, 41, 51) mit Multifunktionsstecker (22, 32, 42, 52) zur Verbindung mit dem Multifunktionsanschluss (93) der Steuereinrichtung (9) aufweist, wodurch die Multifunktionsschnittstelle im Zusatzgerät verfügbar ist.

7. System nach Anspruch 6, wobei das Zusatzgerät einen mit dem Multifunktionskabel (21, 31, 41, 51) in elektrischer Verbindung stehenden Multifunktionsanschluss (23, 33) aufweist.

8. System nach Anspruch 6 oder 7, bei dem das Zusatzgerät als Beleuchtungseinheit (30) ausgebildet ist und ein Leuchtmittel (24) aufweist, das über eine der Ausgangssignalleitungen der Multifunktionsschnittstelle stromversorgt und/oder angesteuert wird.

9. System nach einem der Ansprüche 6 bis 8, bei dem das Zusatzgerät als Notabsenkungseinheit (30) ausgebildet ist und einen Notschalter (35) aufweist, der mit einer der Eingangssignalleitungen der Multifunktionsschnittstelle zusammenwirkt.

10. System nach Anspruch 9, bei dem das Zusatzgerät eine Batterieaufnahme für mindestens eine Batterie (36) aufweist und dazu eingerichtet ist, bei Betätigung des Notschalters (35) eine Notstromversorgungsleitung der Multifunktionsschnittstelle mit einer Spannung der mindestens einen Batterie (36) zu beaufschlagen.

11. System nach einem der Ansprüche 6 bis 10, bei dem das Zusatzgerät als eine USB-Anschlusseinheit (40) ausgebildet ist und mindestens einen USB-Anschluss (44) aufweist, der mit Stromversorgungsleitungen und/oder Datensignalleitungen der Multifunktionsschnittstelle verbunden ist.

12. System nach Anspruch 11, bei dem das Zusatzgerät einen Audioanschluss (45) zur Weiterleitung eines Audiosignals über ein Audiokabel (46) aufweist.

13. System nach einem der Ansprüche 6 bis 12, bei dem das Zusatzgerät als ein Multifunktions-Radiogerät (50) ausgebildet ist und ein Radio (54) aufweist.

14. System nach einem der Ansprüche 6 bis 13, bei dem das Zusatzgerät eine Netzsteckdose (59), die über Datensignale auf der Datensignalleitung der Multifunktionsschnittstelle schaltbar ist, aufweist.

15. Möbel (1) mit einem Rahmenelement (2) und einem über mindestens einen Verstellantrieb (7, 8) beweglich in dem Rahmenelement (2) geführten Stützelement (3), umfassend ein System nach einem der Ansprüche 1 bis 14.

## Claims

1. System for controlling at least one electromotive adjustment drive (7, 8) of a piece of furniture (1), comprising a control unit (9) connected to the adjustment drive (7, 8), at least one auxiliary device, and at least one operating unit (10), wherein the control unit (9) has
- at least one adjustment drive terminal (91) for connection to the at least one electromotive adjustment drive (7, 8), and
- an interface (92) for coupling to at least one operating unit (10),
and wherein, upon actuation of an operating element (12, 13) of the operating unit (10), a switching signal is output at the terminal to activate the at least one electromotive adjustment drive (7, 8) or an electric motor of the electromotive adjustment drive (7, 8),
**characterized in that**
the control unit (9) has a multifunction terminal (93) implemented as a multifunction interface for connecting the at least one auxiliary device, which has
- at least one data signal line for data transmission,
- at least one power supply line, and
- at least one input signal line and one output signal line that differ from the data signal line **in that** they are able to transfer a digital switching signal,
wherein the control unit (9) is configured to outputting data signals on the data signal line of the multifunction interface in dependence on an actuation of one of the operating elements (12, 13) or further operating elements (15, 16, 17) of the operating unit (10), and to apply to the at least one output signal line voltage in dependence on an actuation of one of the operating elements (12, 13) or further operating elements (15, 16, 17) of the operating unit (10).

2. The system according to Claim 1, wherein at least one output signal line is configured to activate an illuminant (24, 34).

3. The system according to Claim 1 or 2, wherein a signal on the at least one input signal line is input and analyzed by the control unit (9).

4. The system according to Claim 3, wherein the signal on the at least one input signal line relates to emergency lowering of the at least one adjustment drive (7, 8), wherein the control unit (9) is configured for the purpose of actuating the at least one adjustment drive (7, 8) independently of an actuation of an operating element (12, 13) of the operating unit (10).

5. The system according to one of Claims 1 to 4, wherein the multifunction terminal (93) has an emergency power supply line in addition to the power supply line.

6. The system according to one of claims 1 to 5, wherein the auxiliary device has a multifunction cable (21, 31, 41, 51) having multifunction plugs (22, 32, 42, 52) for connection to the multifunction terminal (93) of the control unit (9), whereby the multifunction interface is available in the auxiliary device.

7. The system according to Claim 6, wherein the auxiliary device has a multifunction terminal (23, 33) which is electrically connected to the multifunction cable (21, 31, 41, 51).

8. The system according to Claim 6 or 7, wherein the auxiliary device is implemented as a lighting unit (30) and has an illuminant (24), which is supplied with power and/or activated via one of the output signal lines of the multifunction interface.

9. The system according to one of Claims 6 to 8, wherein the auxiliary device is implemented as an emergency lowering unit (30) and has an emergency switch (35), which interacts with one of the input signal lines of the multifunction interface.

10. The system according to Claim 9, wherein the auxiliary device has a battery receptacle for at least one battery (36) and is configured to apply a voltage of the at least one battery (36) to an emergency power supply line of the multifunction interface upon actuation of the emergency switch (35).

11. The system according to one of Claims 6 to 10, wherein the auxiliary device is implemented as a USB terminal unit (40) and has at least one USB terminal (44), which is connected to power supply lines and/or data signal lines of the multifunction interface.

12. The auxiliary device according to Claim 11, wherein the auxiliary device has an audio terminal (45) for relaying an audio signal via an audio cable (46).

13. The system according to one of Claims 6 to 12, wherein the auxiliary device is implemented as a multifunction radio device (50) and has a radio (54).

14. The system according to one of Claims 6 to 13, wherein the auxiliary device has a network power socket (59), which is switchable via data signals on the data signal line of the multifunction interface.

15. A piece of furniture (1) having a frame element (2) and a support element (3), which is guided movably in the frame element (2) via at least one adjustment drive (7, 8), comprising a system according to one of Claims 1 to 14.

## Revendications

1. Système de contrôle d'au moins un entraînement de déplacement à moteur électrique (7, 8) pour un meuble (1), comprenant un dispositif de contrôle (9) relié à l'entraînement de déplacement (7, 8), au moins un appareil supplémentaire et au moins une unité de commande (10), lequel dispositif de contrôle (9) comprend
- au moins une connexion d'entraînement de déplacement (91) pour la liaison avec l'au moins un entraînement de déplacement à moteur électrique (7, 8) et
- une interface (92) pour le couplage à l'au moins une unité de commande (10),
un signal de commutation étant transmis à la connexion lors de l'actionnement d'un élément de commande (12, 13) de l'unité de commande (10) pour actionner l'au moins un entraînement de déplacement à moteur électrique (7, 8) ou un moteur électrique de l'entraînement de déplacement à moteur électrique (7, 8), **caractérisé en ce que** le dispositif de contrôle (9) comporte une connexion multifonction (93) réalisée comme une interface multifonction pour la connexion de l'au moins un appareil supplémentaire, qui comprend
- au moins une ligne de signal de données pour la transmission de données,
- au moins une ligne d'alimentation électrique et
- au moins une ligne d'entrée et une de sortie qui diffèrent de la ligne de signal de données par le fait qu'elles peuvent transmettre un signal de commutation numérique unipolaire,
le dispositif de contrôle (9) étant configuré pour émettre des signaux de données sur la ligne de signaux de données de l'interface multifonction en fonction d'un actionnement de l'un des éléments de commande (12, 13) ou d'autres éléments de commande (15, 16, 17) de l'unité de commande (10) et appliquer une tension à l'au moins une ligne de signal de sortie en fonction d'un actionnement de l'un des éléments de commande (12, 13) ou d'autres éléments de commande (15, 16, 17) de l'unité de commande (10).

2. Système selon la revendication 1, dans lequel au moins une ligne de signal de sortie est configurée pour actionner une lampe (24, 34).

3. Système selon la revendication 1 ou 2, dans lequel un signal est lu et analysé sur l'au moins une ligne de signal d'entrée par le dispositif de contrôle (9).

4. Système selon la revendication 3, dans lequel le signal sur l'au moins une ligne de signal d'entrée concerne un abaissement de secours de l'au moins un entraînement de déplacement (7, 8), le dispositif de contrôle (9) étant configuré pour actionner l'au moins un entraînement de déplacement (7, 8) indépendamment d'un actionnement d'un élément de commande (12, 13) de l'unité de commande (10).

5. Système selon l'une des revendications 1 à 4, dans lequel la connexion multifonction (93) présente, outre la ligne d'alimentation électrique, une ligne d'alimentation électrique de secours.

6. Système selon l'une des revendications 1 à 5 dans lequel l'appareil supplémentaire comprenant un câble multifonction (21, 31, 41, 51) avec des connecteurs multifonction (22, 32, 42, 52) pour la liaison avec la connexion multifonction (93) du dispositif de contrôle (9) de sorte que l'interface multifonction est disponible dans l'appareil supplémentaire.

7. Système selon la revendication 6, dans lequel l'appareil supplémentaire comprend une connexion multifonction (23, 33) en liaison électrique avec le câble multifonction (21, 31, 41, 51 ).

8. Système selon la revendication 6 ou 7, dans lequel l'appareil supplémentaire est conformé comme une unité d'éclairage (30) et comprend une lampe (24) qui est alimentée en courant et/ou actionnée par des lignes de signal de sortie de l'interface multifonction.

9. Système selon l'une des revendications 6 à 8, dans lequel l'appareil supplémentaire est conformé comme une unité d'abaissement de secours (30) et présente un interrupteur de secours (35) qui coopère avec une des lignes de signal d'entrée de l'interface multifonction.

10. Système selon la revendication 9, dans lequel l'appareil supplémentaire présente un réceptacle de pile pour au moins une pile (36) et est configuré pour appliquer une tension de l'au moins une pile (36) à une ligne d'alimentation électrique de secours de l'interface multifonction lorsque l'interrupteur de secours (35) est actionné.

11. Système selon l'une des revendications 6 à 10, dans lequel l'appareil supplémentaire est conformé comme une unité de connexion USB (40) et comprend au moins une connexion USB (44) qui est reliée à des lignes d'alimentation électrique et/ou à des lignes de signal de données de l'interface multifonction.

12. Système selon la revendication 11, dans lequel l'appareil supplémentaire comprend une connexion audio (45) pour transmettre un signal audio par l'intermédiaire d'un câble audio (46).

13. Système selon l'une des revendications 6 à 12, dans lequel l'appareil supplémentaire est conformé comme un appareil de radio multifonction (50) et comprend une radio (54).

14. Système selon l'une des revendications 6 à 13, dans lequel l'appareil supplémentaire comprend une prise secteur (59) qui peut être commutée à l'aide de signaux de données sur la ligne de signal de données de l'interface multifonction.

15. Meuble (1) avec un élément de cadre (2) et un élément de support (3) guidé dans l'élément de cadre (2) en se déplaçant à l'aide d'au moins un entraînement de déplacement (7, 8), comprenant un système selon l'une des revendications 1 à 14.
